Europäisches Patentamt

European Patent Office

Office européen des brevets

(11) Numéro de publication: **0 413 649 A1**

# DEMANDE DE BREVET EUROPEEN

(21) Numéro de dépôt: **90440009.0**

(22) Date de dépôt: **05.02.90**

(51) Int. Cl.5: **E04G 7/16, F16B 7/04, //F16C11/10**

(30) Priorité: **17.08.89 FR 8911139**

(43) Date de publication de la demande: **20.02.91 Bulletin 91/08**

(84) Etats contractants désignés: **AT BE CH DE ES GB GR IT LI LU NL SE**

(71) Demandeur: **S.A. DOUBLET Algernon IV 67 rue de Lille F-59710 Avelin(FR)**

(72) Inventeur: **Doublet, Bernard 67 rue de Lille F-59710 Avelin (Nord)(FR)**

(74) Mandataire: **Lepage, Jean-Pierre Cabinet Lepage & Aubertin Innovations et Prestations S.A. 23/25, rue Nicolas Leblanc B.P. 1069 F-59011 Lille Cédex 1 (Nord)(FR)**

(54) **Dispositif d'assemblage d'éléments longitudinaux.**

(57) L'invention est relative à un dispositif d'assemblage d'éléments longitudinaux, tels que tubes, barres ou autres, destiné notamment à la construction d'échafaudages, gradins, ou autres structes légères.

Selon l'invention, le dispositif d'assemblage (3) est formé de deux pieoes (7 et 8) qui comprennent chacune au moins un embout de raccordement (9, 13), destiné à être placé à l'extrémité de l'élément longitudinal, et une patte (11) traversée par un axe d'articulation (12) et de serrage qui porte un système de verrouillage angulaire. Selon l'invention, le dispositif d'assemblage permet la liaison d'éléments longitudinaux aveo un positionnement angulaire quelconque.

L'invention concerne principalement les constructeurs de structures métalliques démontables.

FIG. 3

Xerox Copy Centre

L'invention est relative à un dispositif d'assemblage d'éléments longitudinaux tels que tubes, barres ou autres, destiné notamment à la construction d'échafaudages, gradins, charpentes ou autres structures démontables. Elle concerne l'industrie en particulier les utilisateurs de constructions métalliques amovibles.

Dans de nombreux domaines d'activités, il est nécessaire de pouvoir créer des structures configurables selon les circonstances. Par exemple, dans la construction de bâtiments, il est nécessaire de pouvoir installer des échafaudages dont la hauteur et la largeur dépendent du site. Il en est de même pour la confection de stands dans des halls d'exposition où la taille de la charpente dépend de la surface allouée pour la mise en place du stand.

Les exemples d'utilisation d'éléments longitudinaux bien souvent qui se présentent sous la forme de tubes profilés pour former une armature sont très nombreux, Bien entendu, la section et la longueur des tubes dépendent de l'emploi qui en est fait, toutefois, en toute circonstance, il est utilisé un dispositif d'assemblage pour précisément fixer les tubes les uns aux autres.

Actuellement, on connait deux principaux types d'éléments d'assemblage. Il s'agit pour les constructions extrêmement légères de pièces de profilés soudés en angle par le fabricant. L'utilisateur alors doit enfiler les extrémités des longerons à solidariser dans les profilés soudés en équerre, ce qui permet de positionner les pièces, ensuite le bridage des longerons est obtenu par exemple à l'aide d'une goupille.

Pour pouvoir réaliser différents montages, le fabricant est amené a proposer à sa clientèle toute une série de dispositifs d'assemblage soudés avec un nombre de raccords différents et selon des angles également distincts. Ceci amène à devoir offrir une gamme très étendue d'éléments d'assemblage qui ne peuvent toutefois couvrir tous les besoins de calage angulaire étant donnée leur affinité.

Dans ces conditions, ce type d'assemblage est essentiellement utilisé dans le cas de configurations fixes pour réaliser une structure donnée. L'utilisateur aura donc à commander au fabricant uniquement les pièces dont il a besoin pour la ccnstruction souhaitée. Il sera très difficile par la suite de modifier la géométrie de la construction à moins d'acquérir de nouvelles pièces spécifiques au nouvel assemblage.

Ainsi, les défauts de cette technique sont une relative faiblesse étant donné qu'il s'agit de pièces légères, une absence totale de réglage du calage angulaire entre les différents éléments longitudinaux à assembler, ce qui oblige à disposer d'un nombreux choix de dispositifs d'assemblage pour pouvoir répondre aux différentes configurations susceptibles d'être rencontrées.

Etant donné qu'il n'est pas toujours possible de se limiter à un type de construction, les fabricants de matériels d'échafaudage par exemple proposent comme autre type de dispositifs d'assemblage un système de fixation à bride.

Ces dispositifs comportent des coquilles qui viennent se positionner de part et d'autre de l'élément longitudinal à assembler, et de moyens de serrage vis-écrou qui solidarisent le tube avec la bride pincée entre les coquilles. La forme géométrique de la bride permet d'assembler deux tubes à angle droit.

Une fabrication particulière permettrait d'envisager un autre calage angulaire. Il faut toutefois noter que ces dispositifs ne sont absolument pas universels. En effet, ils permettent d'assembler deux profilés bout à bout ou deux profilés en équerre. Tout autre assemblage demande la fabrication d'une bride spécifique.

Outre cette spécificité, qui limite les utilisations et réalisations envisageables, le système de serrage à vis-écrou est particulièrement long à mettre en oeuvre.

La principale difficulté rencontrée pour la mise au point d'un dispositif d'assemblage universel est le verrouillage du positionnement angulaire. En effet, on connait des supports à tubes articulés qui utilisent pour leur verrouillage un mécanisme à serrage. Cependant, ces mécanismes ne sont pas fiables sur le plan du verrouillage étant donné qu'un manque de serrage crée un glissement des pièces.

Ainsi, cette technique d'assemblage permet d'obtenir des rigidités élevées mais les défauts de réglage du calage angulaire sont toujours présents. Par conséquent, ces brides ne permettent pas d'apporter une solution générale et de plus le système vis-écrou est long à mettre en oeuvre.

Le but principal de la présente invention est de présenter un dispositif d'assemblage d'éléments longitudinaux, qui assure une possibilité d'assemblage de deux à quatre pièces, avec un positionnement angulaire ajustable et verrouillable. Ainsi, l'utilisateur pourra réaliser des constructions d'armatures de géométries très diverses par simple réglage des dispositifs d'assemblage. Des garanties de sécurité sont offertes grâce au verrouillage du positionnement angulaire, ce verrouillage n'étant pas directement lié à la force de serrage mis en oeuvre pour bloquer le réglage du positionnement angulaire de l'élément d'assemblage de la présente invention.

Un autre avantage de l'élément d'assemblage de la présente invention est la rapidité de sa mise en oeuvre. En effet, outre le fait que le réglage du calage angulaire est très rapide, les systèmes de fixation proposés sont également très faciles à employer.

Un autre avantage de l'élément d'assemblage de la présente invention consiste en sa réalisation structurelle à partir de deux éléments complémentaires, qui dans un mode de réalisation, peuvent être identiques. Ainsi, la fabrication du dispositif d'assemblage sera limitée à l'usinage d'un seul élément, utilisé deux fois, les deux éléments étant positionnés symétriquement entre eux.

D'autres buts et avantages de la présente invention apparaitront au cours de la description qui va suivre qui n'est cependant donnée qu'à titre indicatif.

Selon l'invention, le dispositif d'assemblage d'éléments longitudinaux, tels que tubes, barres ou autres profils, destiné notamment à la construction d'échafaudages, gradins ou autres structures, est caractérisé par le fait qu'il présente des moyens pour ajuster et verrouiller le calage angulaire des éléments longitudinaux.

L'invention sera mieux comprise à la lecture de la description suivante accompagnée de dessins en annexe parmi lesquels:

- la figure 1 schématise l'assemblage de deux éléments longitudinaux,
- la figure 2 illustre l'assemblage de quatre éléments longitudinaux,
- la figure 3 montre un mode préférentiel de réalisation de l'élément d'assemblage d'éléments longitudinaux selon la présente invention,
- les figures 4a, b, c représentent différents modes d'exécution des moyens de verrouillage du calage angulaire de l'élément d'assemblage selon la présente invention.

La présente invention vise un dispositif d'assemblage d'éléments longitudinaux, tels que tubes, barres ou autres profils, destiné notamment à la construction d'échafaudages, de gradins ou autres structures amovibles. Elle concerne principalement les utilisateurs d'armatures métalliques pour constructions légères.

Le dispositif d'assemblage d'éléments longitudinaux selon la présente invention a précisément pour objectif d'apporter une solution aux différentes configurations de géométries de liaison susceptibles d'être rencontrées.

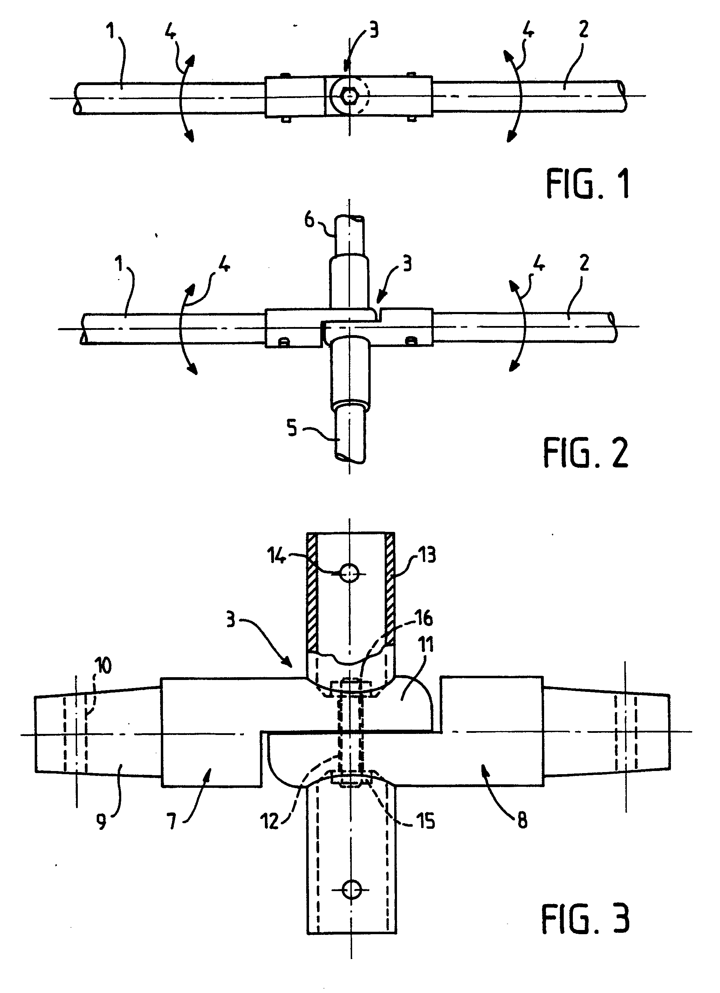

La figure 1 représente le cas le plus simple c'est-à-dire l'assemblage de deux éléments longitudinaux 1 et 2 entre eux. Le dispositif d'assemblage 3 selon la présente invention est bien entendu interposé entre les éléments 1 et 2 et il offre l'avantage de permettre le réglage d'une inclinaison libre de l'un des éléments par rapport à l'autre, comme cela est schématisé par les flèches 4.

Selon la caractéristique principale de la présente invention, le dispositif d'assemblage 3 présente des moyens pour ajuster et verrouiller le calage angulaire des éléments longitudinaux 1 et 2.

Ainsi, on règle le positionnement angulaire puis on verrouille les pièces, ce qui garantit la sécurité et évite un déréglage accidentel du calage angulaire.

Toutefois, le dispositif d'assemblage d'éléments longitudinaux de la présente invention ne se limite pas qu'à la liaison de deux tubes 1 et 2 mais il est possible d'envisager la liaison jusque quatre tubes, comme cela est illustré à la figure 2.

L'inclinaison entre les tubes 1 et 2 en vis-à-vis peut toujours être modifiée, telle que schématisée par les flèches 4, par contre, les tubes 5 et 6 sont fixes. Il est possible d'envisager un positionnement incliné coaxial ou non des tubes 5 et 6 à condition de concevoir le dispositif d'assemblage 3 pour le cas d'espèces. En pratique, il s'avère qu'avec le positionnement ajustable des éléments longitudinaux 1 et 2, cela s'avère amplement suffisant.

Une réalisation intermédiaire peut parfaitement être envisagée avec l'assemblage de trois tubes.

Selon l'invention, le dispositif d'assemblage est formé de deux pièces 7 et 8, telles qu'illustrées à la figure 3. Ces deux pièces comprennent chacune au moins un embout 9 de raccordement à l'extrémité d'un élément longitudinal, non représenté.

De nombreuses solutions peuvent être envisagées au niveau de ce raccordement et en particulier l'exécution dépendra du profil de l'élément longitudinal. En supposant qu'il s'agisse d'un élément tubulaire, la solution préconisée consiste en la formation d'un tenon 9 qui viendra s'emmancher à l'extrémité de l'élément tubulaire. Pour faciliter l'introduction du tenon 9, de préférence celui-ci présente un profil cônique.

A titre d'exemple, le tenon 9 est traversé par un orifice 10 pour permettre l'adoption d'une fixation de l'élément tubulaire par goupilles. Toutefois, d'autres mises en oeuvre peuvent parfaitement être adoptées sans pour autant sortir du cadre de la présente invention, notamment un raccord vissé peut parfaitement être envisagé.

La pièce 7 comprend également une patte 11 traversée par un axe d'articulation 12 représenté en pointillés à la figure 3. La patte 11 porte également un système de verrouillage angulaire.

Pour permettre la fixation d'un élément longitudinal transversal à l'axe de la pièce 7, comme cela est envisagé à la figure 2, un embout de raccordement 13 est mis en place sur la patte 11. Cet embout de raccordement 13 est tubulaire pour permettre l'accès à l'axe d'articulation 12 par son volume intérieur. L'embout 13 tubulaire pourra se raccorder à l'élément longitudinal par un emboitement extérieur ou intérieur. La fixation par goupilles à l'aide d'un orifice 14 reste envisageable.

Selon un mode de construction présentée ici, l'axe d'articulation 12 est formé par une tige filetée 12 sur laquelle sont vissés deux écroux 15 et 16 qui déterminent le serrage des pièces 7 et 8. L'accès aux écrous 15 et 16 est réalisable même en présence d'embouts de raccordement 13 orthogonaux grâce à l'emploi de tubes pour la confection de ces derniers.

Les systèmes de verrouillage présents sur les pattes des pièces 7 et 8 sont complémentaires sur chacune de ces pièces, c'est-à-dire que le verrouillage est assuré par emboitement de formes complémentaires. Pour déverrouiller les pièces, il est nécessaire de les écarter, c'est-à-dire que même avec un serrage minimum de l'axe d'articulation 12, le verrouillage est assuré puisqu'il n'est pas possible de déboiter les pièces l'une de l'autre,

Il est judicieux de choisir un profil de verrouillage identique sur chacune des pièces 7 et 8, car ceci permet d'adopter une fabrication unique.

Ainsi, dans un tel mode de réalisation, on autorisera la réalisation du dispositif d'assemblage à partir de deux pièces 7 et 8 de même forme et présentant un système de verrouillage identique. Une seule pièce devra donc être usinée selon des plans particuliers et l'assemblage sera formé par une disposition symétrique des deux pièces identiques selon le principe de l'invention.

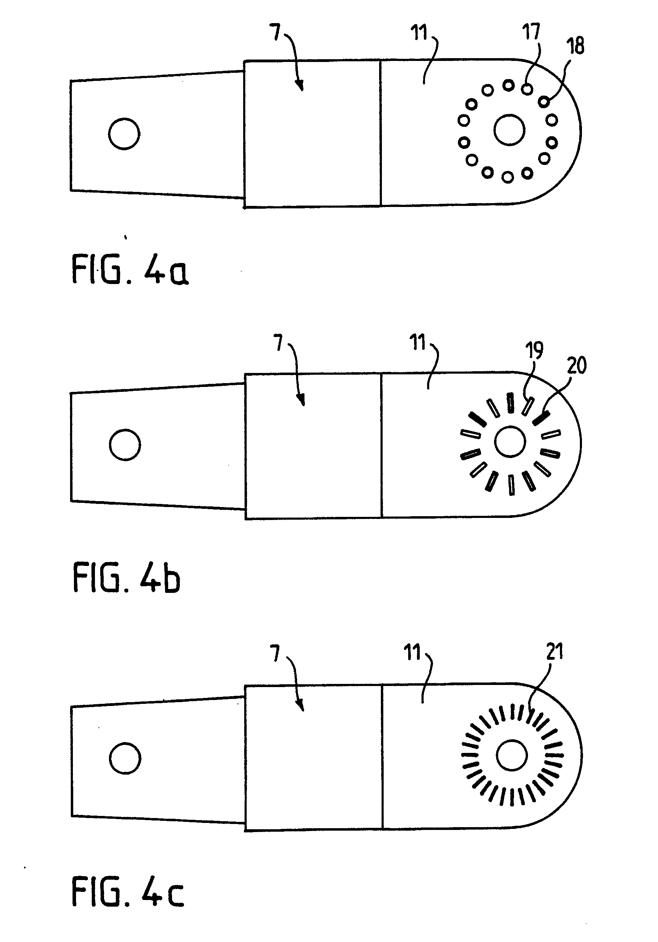

A titre d'exemple, les figures 4a, b, et c, représentent différentes solutions susceptibles d'être adoptées pour le système de verrouillage.

A la figure 4a, le système de verrouillage est assuré par l'emboitement alterné de doigts 17 et orifices 18 complémentaires. Afin que les systèmes de verrouillage soient identiques sur chacune des pièces, un orifice 18 est toujours diamétralement opposé à un doigt 17 par rapport à l'axe d'articulation.

Une autre variante est illustrée à la figure 4b, selon laquelle le système de verrouillage est formé de tenons 19 et mortaises 20. Ces systèmes permettent un réglage discret du calage angulaire. Par exemple, les réglages 0°, 30°, 45°, 60°, 90°, permettent d'apporter une solution dans la majorité des configurations existantes.

Si toutefois, une plus grande finesse dans le réglage était nécessaire, alors il est préconisé d'utiliser un système de verrouillage à crans tel qu'illustré à la figure 4c. Selon ce système, une multitude de crans radiaux 21 sont usinés sur la surface de la patte 11 ce qui permet d'obtenir à la fois un verrouillage et un réglage fin du calage angulaire des deux pièces 7 et 8.

Pour la fabrication du dispositif d'assemblage de la présente invention, on pourrait retenir le moulage des pièces dans un alliage d'aluminium. Des expériences ont permis d'établir que le dispositif d'assemblage était à même à supporter des éléments longitudinaux de grande portée de l'ordre de 15 m.

Il est possible d'envisager une conception rapportée de l'embout 13 de raccordement d'éléments longitudinaux transversaux. Selon cette conception, une rondelle est soudée à l'extrémité de l'embout 13 et cette rondelle percée d'un orifice est traversée par l'axe d'articulation 12 qui, dans ce cas, doit être de longueur plus importante. L'écrou est vissé sur la tige filetée 12 par l'intérieur de l'embout 13 qui alors se trouve emprisonné et fixé sur la patte 11 par l'intermédiaire de la tige filetée 12.

D autres mises en oeuvre de la présente invention à la portée de l'homme de l'art auraient également pu être envisagées sans pour autant sortir du cadre de celle-ci.

## Revendications

1. Dispositif d'assemblage d'éléments longitudinaux, tels que tubes, barres ou autres, destiné notamment à la construction d'échafaudages, gradins ou autres structures légères, caractérisé par le fait qu'il présente des moyens pour ajuster et verrouiller le calage angulaire des éléments longitudinaux (1 et 2).

2. Dispositif d'assemblage d'éléments longitudinaux selon la revendication 1, caractérisé par le fait que les moyens se présentent sous la forme d un assemblage de deux pièces (7 et 8) qui comprennent chacune :
- au moins un embout (9) de raccordement à l'extrémité de l'élément longitudinal (1),
- une patte (11) traversée par un axe d'articulation (12) qui porte un système de verrouillage angulaire.

3. Dispositif d'assemblage d'éléments longitudinaux selon la revendication 2, caractérisé par le fait que la pièce (7) comporte deux embouts (9 et 13) de raccordement, l'un (9) placé dans l'axe de la patte (11), l'autre (13) fixé transversalement sur la patte d'articulation (11).

4. Dispositif d'assemblage d'éléments longitudinaux selon la revendication 2, caractérisé par le fait que les systèmes de verrouillage sont complémentaires sur chacune des pièces (7 et 8).

5. Dispositif d'assemblage d'éléments longitudinaux selon la revendication 2, caractérisé par le fait que les systèmes de verrouillage sont identiques sur chacune des pièces (7 et 8).

6. Dispositif d'assemblage d'éléments longitudinaux selon les revendications 2 et 4, caractérisé par le fait que les deux pièces (7 et 8) sont identiques.

7. Dispositif d'assemblage d'éléments longitudinaux selon la revendication 2, caractérisé par le fait que les systèmes de verrouillage se présentent sous la forme de crans (21) radiaux.

8. Dispositif d'assemblage d'éléments longitudinaux selon la revendication 2, caractérisé par le fait que les systèmes de verrouillage se présentent sous la forme de doigts (17) et orifices complémentaires (18).

9. Dispositif d'assemblage d'éléments longitudinaux selon la revendication 2, caractérisé par le fait que les systèmes de verrouillage se présentent sous la forme de tenons (19) et mortaises (20).

10. Dispositif d'assemblage d'éléments longitudinaux selon la revendication 2, caractérisé par le fait que l'axe d'articulation (12) se présente sous la forme d'une tige filetée dont le serrage est assuré par deux écrous (15 et 16).

FIG. 1

FIG. 2

FIG. 3

FIG. 4a

FIG. 4b

FIG. 4c

**Office européen
des brevets**

# RAPPORT DE RECHERCHE
EUROPEENNE

Numéro de la demande

**EP 90 44 0009**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-1 032 942  (GAUTIER) <br> * page 1, lignes 9-12; page 2, lignes 51-75; figures 1-6 * <br> — — — | 1 | E 04 G 7/16 <br> F 16 B 7/04 // <br> F 16 C 11/10 |
| Y <br> X | <br> FR-A-2 291 393   (KUNSTSTOFFWERK GEBR. ANGER GmbH & CO.) <br> * Page 1, lignes 20-32; figures 1-10,102-104 * <br> — — — | 2-10 <br> 1 | |
| Y <br> X | <br> GB-A-3 877 60   (HONESS) <br> * Page 1, colonne de gauche, ligne 59 - colonne de droite, ligne 64; figure 1 * <br> — — — | 2-10 <br> 1 | |
| A <br> X | <br> FR-A-1 193 305   (AZEMA) <br> * En entier; figures 1-6 * <br> — — — | 4,5,7,10 <br> 1 | |
| A <br> X | <br> FR-A-1 078 224   (RADLI) <br> * Page 2, colonne de gauche, paragraphe 2; figure 8 * <br> — — — | 4,8-10 <br> 1 | |
| A <br> X | <br> US-A-1 706 215   (DAVIDSON) <br> * Page 2, lignes 36-75; figures 1,3 * <br> — — — | 4,5,7,10 <br> 1 | **DOMAINES TECHNIQUES RECHERCHES (Int. Cl.5)** <br><br> F 16 B <br> E 04 G <br> F 16 C |
| A | — — — — — | 4,5,7 | |

Le présent rapport de recherche a été établi pour toutes les revendications

| Lieu de la recherche | Date d'achèvement de la recherche | Examinateur |
|---|---|---|
| La Haye | 16 novembre 90 | CALAMIDA G. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant